# EUROPEAN PATENT APPLICATION

(11) **EP 3 643 979 A1**
(43) Date of publication of application: **29.04.2020**
(21) Application number: 17914906.7
(22) Date of filing: 23.06.2017
(51) Int. Cl.: F24F 11/30

(54) **REFRIGERATION CYCLE DEVICE**

(71) Applicant: Mitsubishi Electric Corporation, Chiyoda-ku Tokyo 100-8310 (JP)
(72) Inventor: MAEDA, Katsuya, Tokyo 100-8310 (JP); KAMIKAWA, Masaaki, Tokyo 100-8310 (JP)
(74) Representative: Pfenning, Meinig & Partner mbB
(86) International application number: PCT/JP2017/023201
(87) International publication number: WO 2018/235262

(57) **Abstract**

A refrigeration cycle apparatus includes: a refrigerant circuit in which a compressor, an oil separator, a condenser, an expansion valve, and an evaporator are sequentially connected by refrigerant pipes; a float switch that detects whether an oil level in the oil separator is lower than a reference position or not; and a controller that determines whether oil shortage occurs or not based on detection time and non-detection time of the float switch within a reference time.

## Description

### Technical Field

The present invention relates to a refrigeration cycle apparatus, and more particularly, to protection of a compressor.

### Background Art

In general, in a compressor of a refrigeration cycle apparatus, refrigerating machine oil (hereinafter referred to as oil) is constantly injected into the vicinity of a compression chamber in order to, for example, reduce leakage of refrigerant from the compression chamber, reduce seizure of sliding surfaces, and lubricate bearings. Furthermore, since oil is also contained in refrigerant gas discharged from the compression chamber in the compressor, the refrigeration cycle apparatus includes a so-called oil separator as a mechanism that recovers the oil.

As oil separators, a demister type of oil separator and a cyclone type of oil separator are present. The demister type of oil separator is an oil separator that separates oil and refrigerant from each other because of a pressure loss as in a wire mesh oil separator, and the cyclone type of oil separator is an oil separator using centrifugal force and the weight of oil.

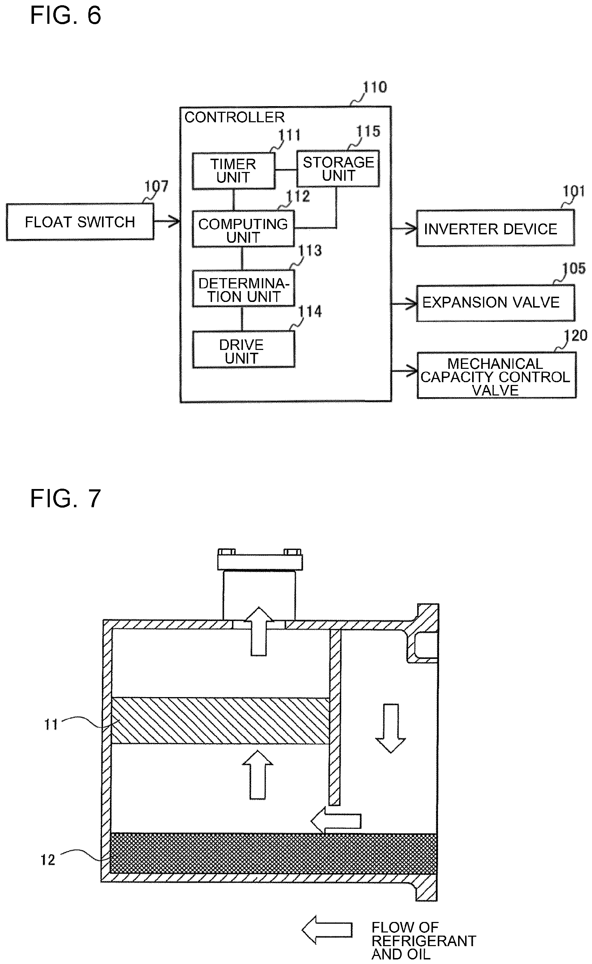

Fig. 7 is a schematic vertical cross-sectional view illustrating an example of an existing demister type of oil separator.

As illustrated in Fig. 7, before discharging compressed high-temperature and high pressure refrigerant containing oil, the existing demister type of oil separator separates the refrigerant and the oil from each other using a medium such as a wire mesh 11, and then discharges only the refrigerant having passed through the wire mesh 11, and the oil falls from the wire mesh 11 due to its own weight and is returned to an oil sump 12.

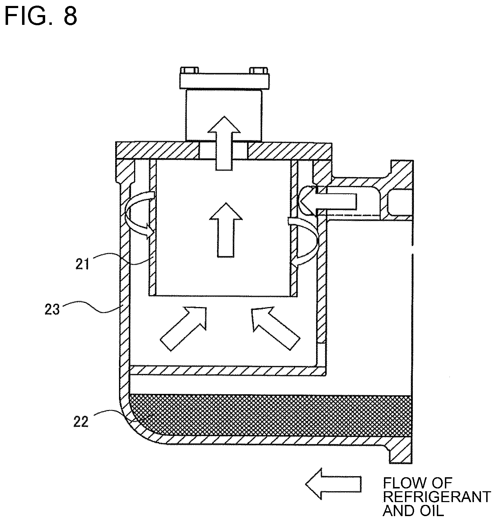

Fig. 8 is a schematic vertical sectional-view illustrating an example of an existing cyclone type oil separator.

As illustrated in Fig. 8, in the existing cyclone type of oil separator, compressed high-temperature and high-pressure refrigerant containing oil attaches to an inner peripheral surface of a cyclone oil separator 23 because of centrifugal force when the refrigerant and the oil passes between an outer periphery of a cylinder extending vertically downward from a circumferential cyclone oil separator lid 21 and an inner periphery of the cyclone oil separator 23. The attaching oil falls down due to its own weight and finally returns to an oil sump 22.

The oil collected in the oil sumps 12 and 22 is returned from the oil sumps 12 and 22 to a lower-pressure side such as a suction pipe because of a differential pressure just before or after the start of compression of the compression chamber. It should be noted that some kinds of refrigeration cycle apparatuses are return oil cooling type of refrigeration cycle apparatuses each provided with a mechanism that cools oil when oil is returned from the oil sumps 12 and 22.

Also, it should be noted that in oil separators, in some cases, the amount of oil in the oil sumps 12 and 22 may be excessively small, and a result the operation of the oil separator may be performed as an oil-shortage operation in which oil cannot be appropriately returned to the low-pressure side. The oil-shortage operation corresponds to one of very harsh conditions for the compressor, and can cause a major failure in the compressor. For example, in the case where the compressor is a screw compressor, the gap between an outer surface of a screw rotor forming the compression chamber and an inner surface of a casing opposite to the screw rotor is managed with an accuracy in units of microns.

As described above, in the case where the refrigeration cycle apparatus is of a return oil cooling type and its operation is performed as an oil-shortage operation, the compressor cannot be cooled with oil, and a discharge temperature thus rises. Consequently, the screw rotor excessively thermally expands to clear the gap between the outer surface of the screw rotor and the inner surface of the casing, and as a result seizure of the screw rotor occurs. In order to prevent occurrence of such a problem, it is important to properly detect the amount of oil in the oil separator and cope with it.

In the past, a refrigeration cycle apparatus that has the following configuration to protect a compressor has been proposed (see, for example, Patent Literature 1). In the refrigeration cycle apparatus, float switches are provided at respective positions which are a position to detect an upper limit level of an oil separator and a position to detect a lower limit level of the oil separator, and in the case where the oil level in the oil separator falls below the lower limit level, a frequency is decreased and an oil return operation is performed until the oil level in the oil separator reaches the upper limit level, in order to protect the compressor.

### Citation List

### Patent Literature

Patent Literature 1: Japanese Patent No. 4250320

### Summary of Invention

### Technical Problem

In recent years, a year-round operating efficiency such as IPLV has been required high, and an inverter operation has been being generalized. It should be noted that in the case where the operating frequency is high, for example, 75 Hz, the oil surface in the oil separator is easily roughed. Therefore, in Patent Literature 1, even in the case where the amount of oil in the oil separator is sufficient, if the oil surface is rough and the oil level falls below the lower limit level even for a short time, an oil return operation is performed until the oil level reaches the upper limit level. That is, the technique according to Patent Literature 1 has a problem in that if the oil surface in the oil separator is rough, the oil level cannot be detected accurately and the oil return operation cannot be performed at a proper timing, thus causing a failure in the compressor. Also, in Patent Literature 1, two float switches needs to be provided as oil level detectors, thus increasing the cost.

The present invention has been made to solve the above problems, and an object of the invention is to provide a refrigeration cycle apparatus that is provided with a compressor the reliability of which can be improved, while keeping down cost. Solution to Problem

A refrigeration cycle apparatus according to an embodiment of the present invention comprises: a refrigerant circuit in which a compressor, an oil separator, a condenser, an expansion valve, and an evaporator are sequentially connected by refrigerant pipes; a float switch that detects whether an oil level in the oil separator is lower than a reference position or not; and a controller that determines whether oil shortage occurs or not based on detection time and non-detection time of the float switch within a reference time.

### Advantageous Effects of Invention

In the refrigeration cycle apparatus according to the embodiment of the present invention, since the float switch is provided, that is, the number of float switches provided is one, and it is determined whether oil shortage occurs or not based on the detection time and non-detection time of the float switch within the reference time, it is possible to accurately detect the oil level even if the oil surface is rough, and improve the reliability of the compressor while keeping cost down.

### Brief Description of Drawings

[Fig. 1] Fig. 1 is a diagram indicating a configuration of a refrigeration cycle apparatus according to Embodiment 1 of the present invention.
[Fig. 2] Fig. 2 is a functional block diagram of the refrigeration cycle apparatus according to Embodiment 1 of the present invention.
[Fig. 3] Fig. 3 is a diagram indicating the result of oil-surface detection by a float switch in Embodiment 1 of the present invention.
[Fig. 4] Fig. 4 is a diagram indicating a control flow of an oil shortage determination process of the refrigeration cycle apparatus according to Embodiment 1 of the present invention.
[Fig. 5A] Fig. 5A is a diagram indicating a first control flow of an oil shortage determination process of a refrigeration cycle apparatus according to Embodiment 2 of the present invention.
[Fig. 5B] Fig. 5B is a diagram indicating a second control flow of the oil shortage determination process of the refrigeration cycle apparatus according to Embodiment 2 of the present invention.
[Fig. 6] Fig. 6 is a diagram illustrating an example of a functional block of the refrigeration cycle apparatus according to Embodiment 2 of the present invention.
[Fig. 7] Fig. 7 is a schematic vertical sectional view illustrating an example of a conventional demister type oil separator.
[Fig. 8] Fig. 8 is a schematic vertical sectional view illustrating an example of a conventional cyclone type oil separator.

### Description of Embodiments

Embodiments of the present invention will be described with reference to the drawings. Regarding each of the figures to be referred to below, components which are the same as those in a previous figure are the same as or equivalent to each other are denoted by the same reference numerals. This is true of the entire text of the specification. Also, the forms of the components described throughout the entire text of the specification are merely examples. The forms of the components are not limited to those described in the specification. In particular, combinations of components are not limited to those described regarding one embodiment, and components described in one embodiment can be applied to another embodiment as appropriate.

Furthermore, whether a pressure is high or low is not determined in accordance with the relationship between the pressure and an absolute value, that is, it is relatively determined based on the state, operation, etc. of the apparatus. In addition, with respect to the same kind of components which are distinguished from each other by suffixes included in the reference signs denoting the components, in the case where the components do not particularly need to be distinguished from each other, or each of the components do not particularly need to be designated, there is a case where the components are denoted by the same reference sign not including the suffixes.

### Embodiment 1

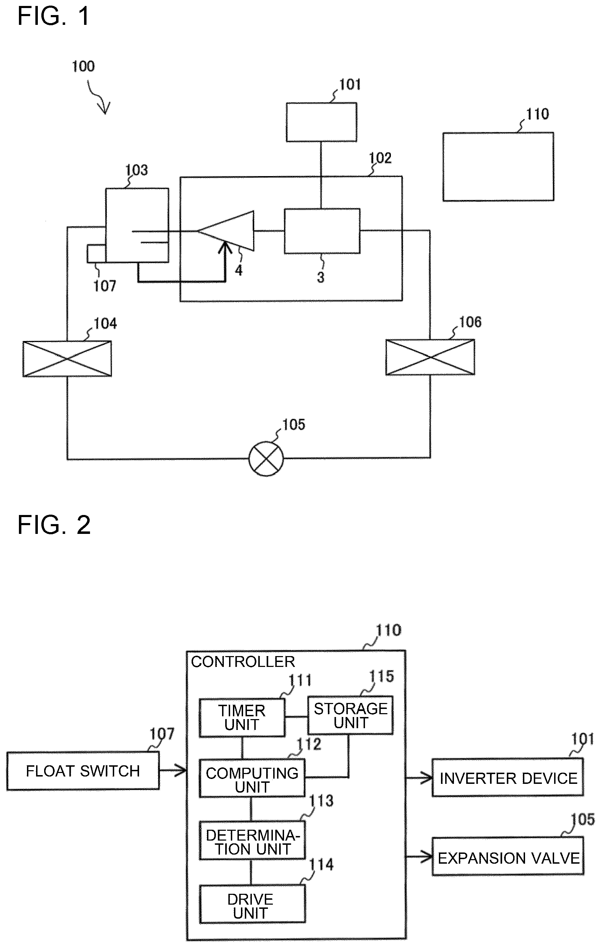

Fig. 1 is a diagram indicating a configuration of a refrigeration cycle apparatus 100 according to Embodiment 1 of the present invention.

The refrigeration cycle apparatus 100 according to Embodiment 1 includes a refrigerant circuit in which a compressor 102, an oil separator 103, a condenser 104, an expansion valve 105, and an evaporator 106 are sequentially connected by refrigerant pipes. Furthermore, the refrigeration cycle apparatus 100 includes an inverter device 101 and a controller 110.

The compressor 102 includes a drive motor 3 and a compression unit 4. The oil separator 103 includes an oil sump (not illustrated) and a mechanism that returns oil from the oil sump to the compression unit 4 using a differential pressure. Also, the oil separator 103 is provided with an on/off contact type of float switch 107 that detects an oil level.

The float switch 107 is provided in the oil separator 103 such that an on/off contact position coincides with a predetermined position (hereinafter referred to as a reference position). The float switch 107 detects whether the oil level, that is, the level of oil in the oil separator 103 is lower than the level of the reference position or not. To be more specific, when the oil level in the oil separator 103 is lower than the reference position, the float switch 107 is turned on, and when the oil level in the oil separator 103 is higher than or the same as the reference position, the float switch 107 is turned off.

It should be noted that the reference position is, for example, a position at which the oil in the oil separator 103 cannot be returned to the compression unit 4, or a position at which such gas entrainment that refrigerant and oil are mixed together occurs, or a position at which a predetermined amount of oil is lost from an initial charge amount of oil, and the reference position can be freely set. Also, the position at which the float switch 107 is provided may be determined in consideration of a sensor error and a design margin.

It should be noted that Fig. 1 illustrates a separate type of refrigeration cycle apparatus in which the oil separator 103 and the compressor 102 are provided as separate elements. This, however, is not limitative. To be more specific, the refrigeration cycle apparatus may be an integration type of refrigeration cycle apparatus in which the compressor 102 includes the oil separator 103. Also, the refrigeration cycle apparatus may be of a return oil cooling type of refrigeration cycle apparatus in which the compressor 102 includes a mechanism that cools oil when returning the oil from the oil sump to the compression unit 4.

Furthermore, the type of oil separator 103 may be either a demister type or cyclone type. Also, the compressor 102 may be any kind of compressor, that is, it may be a single-screw compressor, a twin screw compressor, a scroll compressor, or a reciprocating compressor. Furthermore, although an inverter-driven compressor 102 is used in Embodiment 1, this is not limitative, and a constant-speed type compressor may be used.

Based on a designated frequency, the inverter device 101 controls the supply of power to the compressor 102 to control a driving frequency of the compressor 102. Then, the compressor 102 is driven by power supplied from a power source (not illustrated) via the inverter device 101.

The condenser 104 cools and condenses gas refrigerant, which is gaseous refrigerant discharged by the compressor 102. Also, the expansion valve 105, which serves as a pressure reducing device, reduces the pressure of liquid refrigerant having flowed out of the condenser 104 to expand the liquid refrigerant. The evaporator 106 evaporates refrigerant having passed through the expansion valve 105.

The controller 110 controls the frequency of the inverter device 101, the opening degree of the expansion valve 105, etc., and sends instructions to various devices. Also, the controller 110 can detect a contact on/off state of the float switch 107, makes a determination set in advance by a computing unit 112, and controls the refrigeration cycle apparatus 100. The controller 110 is, for example, dedicated hardware or a CPU (also referred to as a central processing unit, a processing unit, an arithmetic unit, a microprocessor, a microcomputer, and a processor) that executes programs stored in a storage unit 115 which will be described later.

Fig. 2 is a functional block diagram of the refrigeration cycle apparatus 100 according to Embodiment 1 of the present invention.

The controller 110 includes a timer unit 111, the computing unit 112, a determination unit 113, a drive unit 114, and the storage unit 115. To the controller 110, a signal from the float switch 107 is input. Also, the controller 110 outputs signals to the inverter device 101 and the expansion valve 105.

The timer unit 111 is provided to measure time. Based on the measured time and the result of oil level detection by the float switch 107, the computing unit 112 calculates the sum A of ON-state time (which will be hereinafter referred to as a total ON-state time A) and the sum B of OFF-state time (which will be hereinafter referred to as a total OFF-state time B). The ON-state time is time in which the float switch 107 is in a detection state, and the OFF-state time is time in which the float switch 107 is in a non-detection state, as described later. The determination unit 113 determines whether oil shortage, which will be described later, occurs or not based on the result of calculation by the computing unit 112. The drive unit 114 drives the inverter device 101 and the expansion valve 105 based on the result of the determination by the determination unit 113. The storage unit 115 stores data regarding a threshold C to be described later, etc.

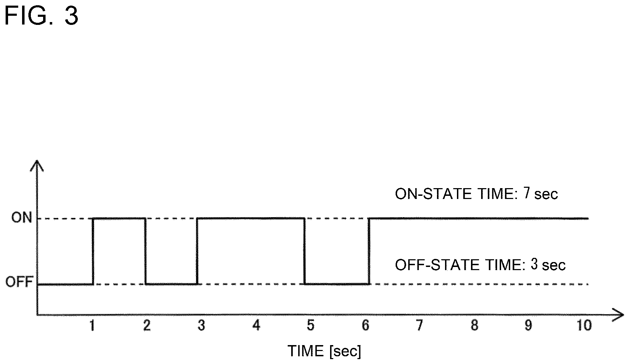

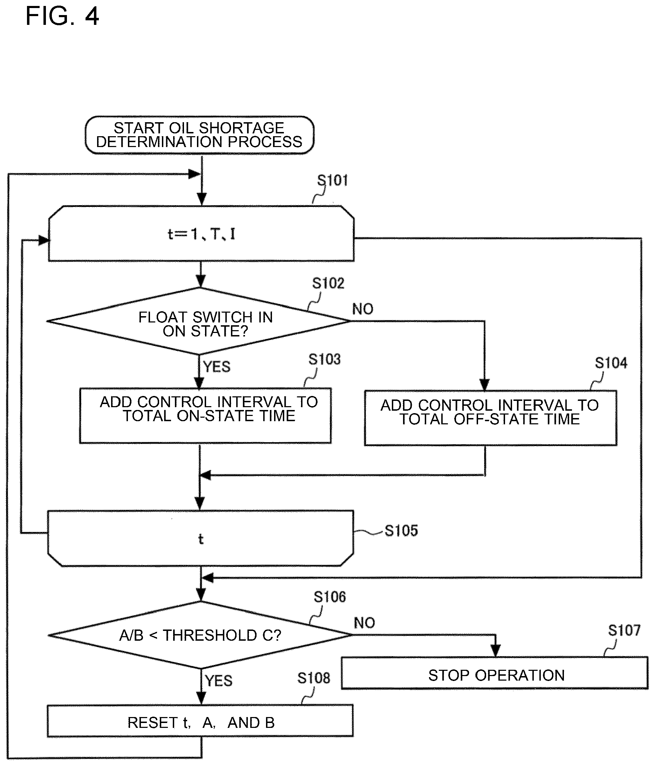

Fig. 3 indicates the result of oil level detection by the float switch 107 in Embodiment 1 of the present invention, and Fig. 4 indicates a control flow of an oil shortage starvation determination process of the refrigeration cycle apparatus 100 according to Embodiment 1 of the present invention.

The control flow of the oil shortage determination process of the refrigeration cycle apparatus 100 according to Embodiment 1 will be described with reference to Figs. 3 and 4.

After the oil shortage determination process, the controller 110 determines each of the total ON-state time A and the total OFF-state time B of the float switch 107 within a predetermined reference time T (for example, 10 sec.) (steps S101 to S105).

To be more specific, using the float switch 107, the controller 110 detects at control intervals I (for example, at intervals of 1 sec) whether the oil level in the oil separator 103 is lower than a reference position, i.e., whether the float switch 107 is on or off (step S102). When determining that the float switch 107 is on (YES in step S102), the controller 110 adds the control interval I to the total ON-state time A (step S103).

On the other hand, when determining that the float switch 107 is off (NO in step S102), the controller 110 adds the control interval I to the total OFF-state time B (step S104). Subsequently, the controller 110 returns to step S101 to add the control interval I to a measured time t and perform the same addition process as described above. Then, the controller 110 repeats the addition process until the measured time t becomes equal to the reference time T.

In the case where the oil surface in the oil separator 103 is rough, the float switch 107 chatters, repeatedly performs detection and non-detection, that is, the state of the float switch 107 repeatedly changes between the ON state and the OFF state. Therefore, when the oil surface in the oil separator 103 is rough, the result of oil level detection by the float switch 107 in the reference time T is obtained as illustrated in Fig. 3.

After steps S101 to S105, the controller 110 determines whether or not a value obtained by dividing the total ON-state time A (7 sec. in the case indicated in Fig. 3) by the total OFF-state time B (3 sec. in the case of Fig. 3) is less than the threshold C (step S106), which is set in advance. It should be noted that the controller 110 determines whether oil shortage occurs or not based on whether the following formula is satisfied or not: the total ON-state time A / the total OFF-state time B < the threshold C.

When determining that the total ON-state time A / the total OFF-state time B is greater than or equal to the threshold C, that is, oil shortage occurs and a necessary amount of oil is not secured (NO in step S106), the controller 110 stops the operation of the compressor 102 to protect the compressor 102 (step S107).

By contrast, when determining that the total ON-state time A / the total OFF-state time B is less than the threshold C, that is, oil shortage does not occur and that a necessary amount of oil is secured (YES in step S106), the controller 110 resets the measured time t, the total ON-state time A, and the total ON-state time B (step S106), and then causes the operation of the compressor 102 to continue (step S108).

It should be noted that the threshold C is determined in advance in accordance with which operation mode is set, and is determined to fall within the range of 0.2 to 1.5 (however, it is not limited to this range). Also, it is not indispensable that the threshold C is a fixed value. For example, the threshold C may be changed with respect to a predetermined operating frequency. For example, with a demister type of oil separator 103, at a high operating frequency of 65 Hz or higher, the oil surface in the oil separator 103 is easily roughed, and the threshold C is thus set to a great value (for example, 1.2) including a margin; on the other hand, at below 65 Hz, the oil surface in the oil separator 103 is not easily roughed, and the threshold C may be thus set to a small value (for example, 0.4). Also, in order to determine whether oil shortage occurs or not, it may be determined whether the total ON-state time A / the sum of the total ON-state time A and the total OFF-state time B (the total ON-state time A + the total OFF-state time B) is less than the threshold C or not.

Thus, the refrigeration cycle apparatus 100 according to Embodiment 1 includes the refrigerant circuit in which the compressor 102, the oil separator 103, the condenser 104, the expansion valve 105, and the evaporator 106 are sequentially connected by refrigerant pipes; the float switch 107 that detects whether the oil level in the oil separator 103 is lower than a reference position or not; and the controller 110 that determines whether oil shortage occurs or not based on the total time of detection by the float switch 107 time and the total time of non-detection by the float switch 107 within a reference time.

In the refrigeration cycle apparatus 100 according to Embodiment 1, since the single float switch 107 is provided and it is determined whether oil shortage occurs or not based on the total time of detection by the flow switch 107 and the total time of non-detection time by the float switch 107 within the reference time, it is possible to accurately detect the oil level even if the oil surface is rough, and improve the reliability of the compressor 102 while keeping cost down.

Also, when determining that oil shortage occurs, the controller 110 of the refrigeration cycle apparatus 100 according to Embodiment 1 stops the operation of the compressor 102 to protect the compressor 102.

In the refrigeration cycle apparatus 100 according to Embodiment 1, when it is determined that oil shortage occurs, the operation of the compressor 102 is stopped in order to protect the compressor 102. Therefore, the compressor 102 can be protected appropriately.

### Embodiment 2

A refrigeration cycle apparatus 100 according to Embodiment 2 of the present invention is different from that according to Embodiment 1 only in the control flow of the oil shortage determination process. It should be noted that regarding Embodiment 2, only the differences between regarding Embodiments 1 and 2 will be described, and matters that will not be described regarding Embodiment 2 are the same as those of Embodiment 1.

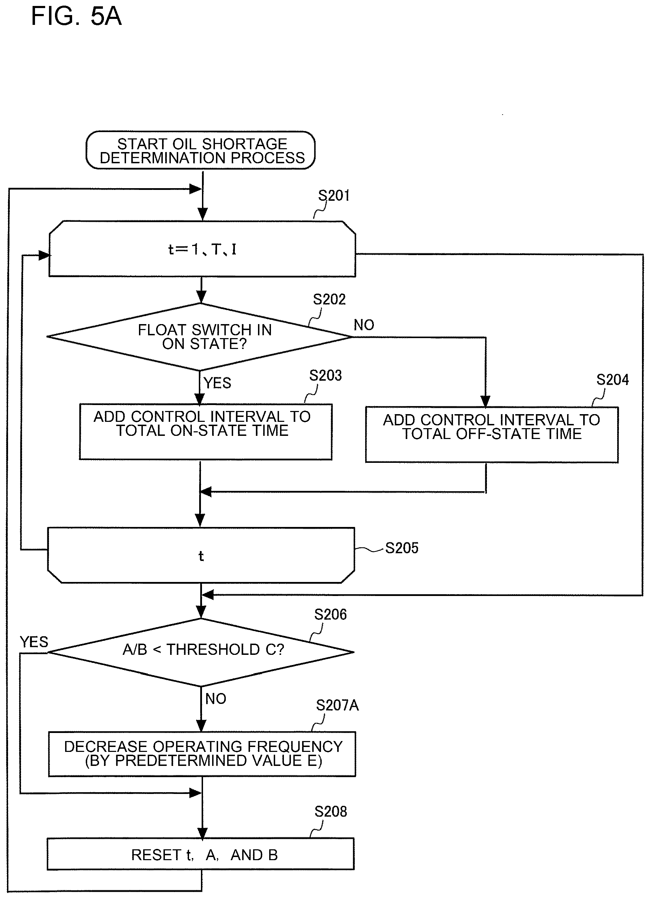

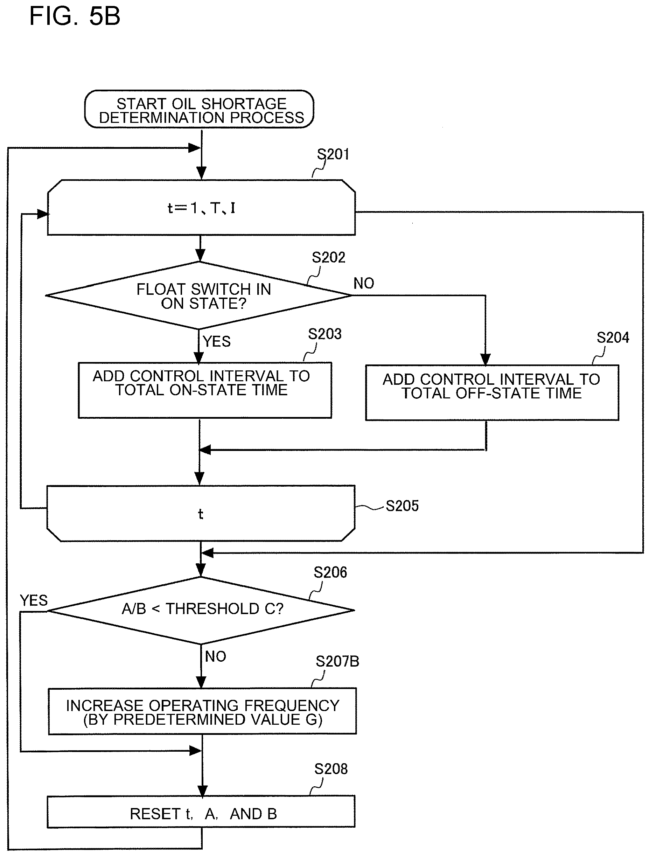

Fig. 5A is a flow chart indicating a first control flow of an oil shortage determination process of the refrigeration cycle apparatus 100 according to Embodiment 2 of the present invention, and Fig. 5B is a flow chart indicating a second control flow of the oil shortage determination process of the refrigeration cycle apparatus 100 according to Embodiment 2 of the present invention. It should be noted that Fig. 5A indicates a control flow in the case where the oil separator 103 is of a demister type, whereas Fig. 5B indicates a control flow in the case where the oil separator 103 is a cyclone type.

The control flow of the oil shortage determination process of the refrigeration cycle apparatus 100 according to embodiment 2 will be described with reference to Figs. 5A and 5B.

After the oil shortage determination process, the controller 110 determines the total ON-state time A and total OFF-state time B of the float switch 107 within the predetermined reference time T (e.g., 10 sec.) (steps S201 to S205).

To be more specific, with respect to the float switch 107, the controller 110 detects at control intervals I (each of which is, for example, 1 sec) whether the oil level in the oil separator 103 is lower than a reference position or not, i.e., determines whether the float switch 107 is on or off (step S202). Then, when determining that the float switch 107 is on (YES in step S202), the controller 110 adds the control interval I to the total ON-state time A (step S203).

By contrast, when determining that the float switch 107 is off (NO in step S202), the controller 110 adds the control interval I to the total OFF-state time B (step S204). Then, the controller 110 returns to step S201 to add the control interval I to the measured time t and perform an addition process that is the same as the above addition process. Then, the controller 110 repeats the addition process until the measured time t becomes equal to the reference time T.

After steps S201 to S205, the controller 110 determines whether or not a value obtained by dividing the total ON-state time A by the total OFF-state time B is less than the threshold C set in advance (step S206). It should be noted that the controller 110 determines whether oil shortage occurs or not based on whether the following formula is satisfied or not: the total ON-state time A / the total OFF-state time B < the threshold C.

When determining that the total ON-state time A / the total OFF-state time B is less than the threshold C, that is, oil shortage does not occur and a necessary amount of oil is secured (YES in step S206), the controller 110 proceeds to step S210.

By contrast, when determining that the total ON-state time A / the total OFF-state time B is greater than or equal to the threshold C, that is, oil shortage occurs and a necessary amount of oil is not secured (NO in step S206), the controller 110 performs a process that varies in accordance with the type of oil separator 103.

When the oil separator 103 is of a demister type, the controller 110 decreases the operating frequency F of the compressor 102 by a predetermined value E (step S207A) as indicated in Fig. 5A, and proceeds to step S208. In a high operating frequency region, the oil separator 103 that is of a demister type tends to discharge a larger amount of oil than oil returning from the suction side and cause oil shortage. Therefore, by decreasing the operating frequency F of the compressor 102, the amount of oil to be discharged is reduced to make up the oil shortage.

By contrast, in the case where the oil separator 103 is of a cyclone type, the controller 110 increases the operating frequency F of the compressor 102 by a predetermined value G (step S207B) as illustrated in Fig. 5B, and proceeds to step S208. Because the oil separator 103 that is of a cyclone type separates oil and refrigerant from each other using centrifugal force and the weight of the oil, in a low operating frequency region, the action of centrifugation is reduced, thus increasing the amount of oil contained in refrigerant to be discharged and causing a shortage of oil in the compressor 102. Furthermore, because the operating frequency is low and the amount of circulating refrigerant is reduced, the amount of oil that returns from the suction side is also reduced. Since these two events simultaneously occur, oil shortage occurs. Therefore, by increasing the operating frequency F of the compressor 102, the amount of oil to be discharged is increased to make up the oil shortage.

Subsequently, in step S208, the controller 110 resets the measured time t, the total ON-state time A, and the total ON-state time B, and then causes the operation of the compressor 102 to continue (step S201).

In such a manner, the controller 110 of the refrigeration cycle apparatus 100 according to Embodiment 2 changes the operating frequency F of the compressor 102 to protect the compressor 102.

In order to protect the compressor 102, the refrigeration cycle apparatus 100 according to Embodiment 2 changes the operating frequency F of the compressor 102 without stopping the operation of the compressor 102. Therefore, the compressor 102 can be continuously operated, and thus contribute to energy saving.

Also, in order to protect the compressor 102, in the case where the oil separator 103 is of a demister type, the controller 110 of the refrigeration cycle apparatus 100 according to Embodiment 2 decreases the operating frequency of the compressor 102 by a predetermined value, and in the case where the oil separator 103 is of a cyclone type, the controller 110 increases the operating frequency of the compressor 102 by another predetermined value.

Also, if there is a frequency band in which oil shortage does not easily occur, the method for controlling the refrigeration cycle apparatus 100 may be changed in accordance with the frequency at the time of determining that oil shortage occurs. Supposing that for example, a frequency of 50 Hz is an operating condition in which oil shortage does not easily occur, when determining that oil shortage occurs during an operation that is performed at 50 Hz or higher, the controller 110 may decrease the operating frequency F of the compressor 102, and if determining that oil shortage occurs during an operation that is performed at less than 50 Hz, the controller 110 may increase the operating frequency F of the compressor 102.

Fig. 6 is a functional block diagram that illustrates an example of functional blocks of the refrigeration cycle apparatus 100 according to Embodiment 2 of the present invention.

It is described above that oil shortage in the refrigeration cycle apparatus 100 is reduced by controlling the operating frequency F of the compressor 102. Besides, in the case where a constant-speed compressor is used, there is also a method for reducing oil shortage in the refrigeration cycle apparatus 100 by loading or unloading a mechanical capacity-control valve 120 that is provided as illustrated in Fig. 6. More specifically, if determining that oil shortage occurs when the mechanical capacity-control valve 120 is loaded, the controller 110 determines that the amount of discharged oil is larger than the amount of oil that returns from the suction side, and unloads the mechanical capacity-control valve 120 to reduce the amount of oil to be discharged. In contrast, if determining that oil shortage occurs when the mechanical capacity-control valve 120 is unloaded, the controller 110 determines that the amount of the oil that returns from the suction side is smaller than that of discharged oil, and loads the mechanical capacity-control valve 120 to increase the amount of oil that returns from the suction side.

### Reference Signs List

3 motor 4 compression unit 11 wire mesh 12 oil sump 21 cyclone oil separator lid 22 oil sump 23 cyclone oil separator100 refrigeration cycle apparatus 101 inverter device 102 compressor 103 oil separator 104 condenser 105 expansion valve 106 evaporator 107 float switch 110 controller 111 timer unit 112 computing unit 113 determination unit 114 drive unit 115 storage unit 120 mechanical capacity-control valve

## Claims

1. A refrigeration cycle apparatus comprising:
a refrigerant circuit in which a compressor, an oil separator, a condenser, an expansion valve, and an evaporator are sequentially connected by refrigerant pipes;
a float switch configured to detect whether an oil level in the oil separator is lower than a reference position or not; and
a controller configured to determine whether oil shortage occurs or not based on detection time and non-detection time of the float switch within a reference time.

2. The refrigeration cycle apparatus of claim 1, wherein the controller determines whether oil shortage occurs or not based on a sum of the detection time and a sum of the non-detection time of the float switch.

3. The refrigeration cycle apparatus of claim 1 or 2, wherein when determining that oil shortage occurs, the controller performs a protection operation to protect the compressor.

4. The refrigeration cycle apparatus of claim 3, wherein as the protection operation to protect the compressor, the controller stops an operation of the compressor.

5. The refrigeration cycle apparatus of claim 3, wherein as the protection operation to protect the compressor, the controller changes an operating frequency of the com pressor.

6. The refrigeration cycle apparatus of claim 5, wherein in a case where the oil separator is of a demister type, as the protection operation to protect the compressor, the controller decreases the operating frequency of the compressor by a predetermined value.

7. The refrigeration cycle apparatus of claim 5, wherein in a case where the oil separator is of a cyclone type, as the protection operation to protect the compressor, the controller increases the operating frequency of the compressor by a predetermined value.

8. The refrigeration cycle apparatus of claim 5, wherein as the protection operation to protect the compressor, the controller increases or decreases the operating frequency of the compressor by a predetermined value in accordance with the operating frequency at a time of determining that oil shortage occurs.

9. The refrigeration cycle apparatus of claim 8, wherein as the protection operation to protect the compressor, the controller decreases the operating frequency when the operating frequency at the time of determining that oil shortage occurs is higher than a predetermined operating frequency, and increases the operating frequency when the operating frequency at the time of determining that oil shortage occurs is lower than the predetermined operating frequency.

10. The refrigeration cycle apparatus of claim 3, further comprising a mechanical capacity-control valve,
wherein as the protection operation to protect the compressor, the controller controls the mechanical capacity-control valve at a time of determining that oil shortage occurs.

11. The refrigeration cycle apparatus of claim 10, wherein as the protection operation to protect the compressor, the controller loads the mechanical capacity-control valve when the mechanical capacity-control valve is unloaded at the time of determining that oil shortage occurs, and unloads the mechanical capacity-control valve when the mechanical capacity-control valve is loaded at the time of determining that oil shortage occurs.

12. The refrigeration cycle apparatus of any one of claims 1 to 9, wherein the compressor is an inverter-driven compressor.

13. The refrigeration cycle apparatus of any one of claims 1 to 12, wherein the compressor is a single-screw compressor.

14. The refrigeration cycle apparatus of any one of claims 1 to 12, wherein the compressor is a twin-screw compressor.
